(19) Europäisches Patentamt
European Patent Office
Office européen des brevets

(11) **EP 3 867 595 B1**

(12) **FASCICULE DE BREVET EUROPÉEN**

(45) Date de publication et mention
de la délivrance du brevet:
**06.09.2023 Bulletin 2023/36**

(21) Numéro de dépôt: **19817384.1**

(22) Date de dépôt: **14.10.2019**

(51) Classification Internationale des Brevets (IPC):
**G01B 5/004** (2006.01) **G01B 7/004** (2006.01)
**G01B 11/00** (2006.01) **G01B 17/00** (2006.01)
**G01S 7/497** (2006.01) **G01S 17/86** (2020.01)
**G01S 17/88** (2006.01) **G06V 10/24** (2022.01)
**G06V 20/52** (2022.01)

(52) Classification Coopérative des Brevets (CPC):
**G01B 11/002; G01B 5/004; G01B 7/004;
G01B 17/00; G01S 7/497; G01S 17/86;
G01S 17/88; G06V 10/245; G06V 20/52**

(86) Numéro de dépôt international:
**PCT/FR2019/052429**

(87) Numéro de publication internationale:
**WO 2020/079355 (23.04.2020 Gazette 2020/17)**

(54) **CONFIGURATION D'UN DISPOSITIF DE CONTROLE NON DESTRUCTIF**

ANORDNUNG EINER ZERSTÖRUNGSFREIEN PRÜFVORRICHTUNG

CONFIGURATION OF A NON-DESTRUCTIVE TESTING DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.10.2018 FR 1859569**

(43) Date de publication de la demande:
**25.08.2021 Bulletin 2021/34**

(73) Titulaire: **Commissariat à l'énergie atomique
et aux énergies alternatives
75015 Paris (FR)**

(72) Inventeurs:
• **CARDOSO, Michel
92100 BOULOGNE-BILLANCOURT (FR)**
• **DESREZ, Thomas
91120 PALAISEAU (FR)**
• **BEY, Sébastien
78830 BULLION (FR)**

(74) Mandataire: **Brevalex
Tour Trinity
1 B Place de la Défense
92400 Courbevoie (FR)**

(56) Documents cités:
**EP-A2- 1 096 268      US-A- 5 748 854
US-A1- 2011 119 025**

## Description

## DOMAINE TECHNIQUE

La présente invention concerne de manière générale le contrôle non destructif de pièces mécaniques. Elle concerne plus particulièrement la définition et la configuration d'une scène de travail dans l'espace pour un opérateur réalisant une acquisition manuelle de mesures sur une pièce mécanique à contrôler.

## ÉTAT DE LA TECHNIQUE ANTÉRIEURE

Dans le cadre d'un contrôle non destructif, un opérateur peut être amené à inspecter manuellement une pièce mécanique ou une portion de celle-ci, à l'aide d'une sonde et d'une électronique d'acquisition.

Le contrôle non destructif de pièce mécanique est utilisé notamment pour contrôler des soudures.

Les techniques connues supposent une connaissance a priori de la géométrie de la pièce à inspecter. C'est le cas par exemple de la technique décrite dans FR 97 15902 qui utilise en outre un système porteur mécanique, ce qui introduit des imprécisions inhérentes à un tel système. Il y a ainsi un cumul des imprécisions géométriques du porteur, du système de préhension de la sonde et de la fixation du porteur sur la pièce à inspecter.

De plus, le système mécanique induit un manque de maniabilité.

Enfin, un modèle de la sonde et de son système de préhension doit être connu à l'avance pour être préchargé dans un calculateur.

EP 1 096 268 concerne un système hybride de suivi d'objet en temps réel dans un volume spécifié. Ce système comprend un sous-système optique et un sous-système non optique.

US 5 748 854 concerne l'apprentissage de position de robot. Une unité d'apprentissage de position est utilisée pour enseigner une position à un robot industriel.

US 2011/119025 A1 décrit un dispositif d'aide pour métrologie dimensionnelle.

## EXPOSÉ DE L'INVENTION

L'invention vise à résoudre les problèmes de la technique antérieure en fournissant un procédé selon la revendication 1 de configuration d'un dispositif de contrôle non destructif d'une pièce mécanique, le dispositif comportant un système optique de suivi de mouvement, une sonde de contrôle non destructif reliée de manière fixe à un premier corps rigide, et un dispositif de pointage comportant une pointe et relié de manière fixe à un second corps rigide, le procédé comportant notamment des étapes de :

apprentissage d'une origine d'une zone d'examen de la surface de la pièce mécanique à l'aide du dispositif de pointage, dans un repère lié au système optique de suivi de mouvement,

apprentissage d'axes de la zone d'examen de la pièce mécanique à l'aide du dispositif de pointage, dans le repère lié au système optique de suivi de mouvement, de manière à définir un repère lié à la zone d'examen,

apprentissage d'une origine et d'axes d'une surface active de la sonde à l'aide du dispositif de pointage, dans un repère lié au premier corps rigide de la sonde, et

détermination de la position et de l'orientation de la surface active de la sonde, dans le repère lié à la zone d'examen.

La présente invention ne nécessite pas de système porteur mécanique. Au contraire, elle est particulièrement avantageuse dans le cadre d'un contrôle effectué manuellement par un opérateur. Cela permet par exemple à un opérateur de faire un contrôle in situ d'une pièce mécanique sans installation complexe d'un système porteur mécanique.

La présente invention ne nécessite pas de connaissance a priori des dimensions de la géométrie de la pièce à inspecter.

Grâce à l'invention, la précision sur la position et l'orientation de la sonde est uniquement liée au système optique de suivi de mouvement.

Selon une caractéristique préférée, les étapes d'apprentissage de l'origine et des axes de la zone d'examen comporte la détermination d'une matrice de transformation permettant de passer du repère lié au système optique de suivi de mouvement au repère lié à la zone d'examen.

Selon une caractéristique préférée, l'étape d'apprentissage de l'origine et des axes de la surface active de la sonde comporte la détermination d'une matrice de transformation permettant de passer du repère lié au système optique de suivi de mouvement au repère lié au premier corps rigide et d'une matrice de transformation permettant de passer d'un repère lié à la surface active de la sonde au repère lié au premier corps rigide.

Selon une caractéristique préférée, l'étape de détermination de la position et de l'orientation de la surface active de la sonde, dans le repère lié à la zone d'examen, comporte

- un suivi de mouvement du premier corps rigide lié à la sonde par le système optique de suivi de mouvement,
- une détermination d'une matrice dynamique, qui est la matrice de transformation permettant de passer du repère lié au premier corps rigide au repère lié au système optique de suivi de mouvement,
- une détermination d'une matrice de transformation permettant de passer du repère (RS) lié à la surface active de la sonde au repère lié à la zone d'examen.

Selon une caractéristique préférée, le dispositif comportant en outre un calculateur, une mémoire et un module de commande pour commander un enregistrement de position de la pointe en mémoire, le procédé comporte une mémorisation de l'origine et des axes de la zone d'examen, et de l'origine et des axes de la surface active de la sonde, dans le repère lié au système optique de suivi de mouvement.

Selon une caractéristique préférée, le procédé comporte une mémorisation de l'origine et de l'orientation de la surface active de la sonde, dans un repère lié à la zone d'examen.

Selon une caractéristique préférée, le procédé comporte aussi une étape de détermination des dimensions de la zone d'examen.

L'invention concerne aussi un procédé de contrôle non destructif d'une pièce mécanique, comportant l'exécution préalable du procédé de configuration selon l'une quelconque des revendications 1 à 7 et comportant de plus au moins une étape parmi :

- Détermination de la vitesse de déplacement de la surface active de la sonde,
- Vérification de l'orientation de la sonde par rapport au repère lié à la zone d'examen,
- Vérification de l'accomplissement de la couverture de la zone d'examen, par rapport à une couverture prédéfinie,
- Vérification du couplage entre la surface active de la sonde et la zone d'examen de la pièce mécanique.

L'invention concerne aussi un dispositif selon la revendication 9 de contrôle non destructif d'une pièce mécanique, comportant un système optique de suivi de mouvement, une sonde de contrôle non destructif reliée de manière fixe à un premier corps rigide, un dispositif de pointage comportant une pointe et relié de manière fixe à un second corps rigide, et un calculateur, dans lequel le calculateur est notamment configuré pour :

apprendre une origine d'une zone d'examen de la surface de la pièce mécanique à l'aide du dispositif de pointage, dans un repère lié au système optique de suivi de mouvement,
apprendre des axes de la zone d'examen de la pièce mécanique à l'aide du dispositif de pointage, dans le repère lié au système optique de suivi de mouvement, de manière à définir un repère lié à la zone d'examen,
apprendre une origine et des axes d'une surface active de la sonde à l'aide du dispositif de pointage, dans un repère lié au premier corps rigide de la sonde, et
déterminer l'origine et l'orientation de la surface active de la sonde, dans un repère lié à la zone d'examen.

Selon une caractéristique préférée, le calculateur est aussi configuré pour comporte déterminer les dimensions de la zone d'examen.

Selon une caractéristique préférée, le calculateur est aussi configuré pour effectuer au moins une opération parmi :

- Déterminer la vitesse de déplacement de la surface active de la sonde,
- Vérifier l'orientation de la sonde par rapport aux axes de la zone d'examen,
- Vérifier l'accomplissement de la couverture de la zone d'examen, par rapport à une couverture prédéfinie,
- Vérifier le couplage entre la surface active de la sonde et la zone d'examen de la pièce mécanique.

Le procédé de contrôle non destructif et le dispositif présentent des avantages analogues à ceux précédemment présentés.

Dans un mode particulier de réalisation, les étapes du procédé selon l'invention sont mises en oeuvre par des instructions de programme d'ordinateur.

En conséquence, l'invention vise aussi un programme d'ordinateur selon la revendication 12.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations selon la revendication 13.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé selon l'invention.

## BRÈVE DESCRIPTION DES DESSINS

D'autres caractéristiques et avantages apparaîtront à la lecture de la description suivante d'un mode de réalisation préféré donné à titre d'exemple non limitatif, décrit en référence aux figures dans lesquelles :

Les figures 1a à 1d représentent un dispositif de contrôle non destructif selon un mode de réalisation de l'invention,

La figure 2 représente une pièce mécanique à contrôler par le dispositif de contrôle non destructif de la figure 1, et

La figure 3 représente un procédé de configuration du dispositif de contrôle non destructif représenté à la figure 1, selon un mode de réalisation de l'invention.

## EXPOSÉ DÉTAILLÉ DE MODES DE RÉALISATION PARTICULIERS

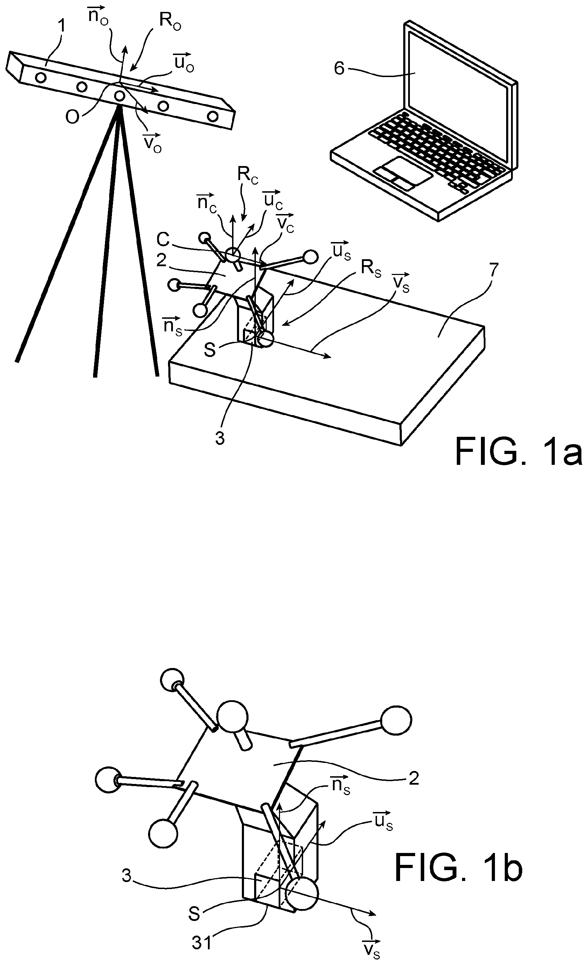

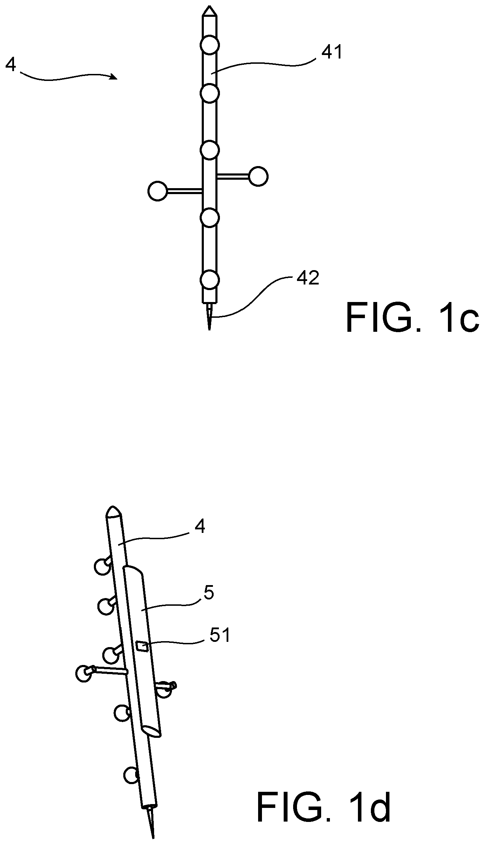

Selon un mode de réalisation préféré représenté à la **figure 1,** un dispositif de contrôle non destructif d'une pièce mécanique comporte un système optique de suivi de mouvement 1 qui a pour fonction de suivre le mouvement d'un objet dans l'espace et plus particulièrement le mouvement de corps rigides tels que décrits dans la suite.

Le système optique de suivi de mouvement 1 est associé à un repère orthonormé $R_o = (O, \vec{u}_o, \vec{v}_o, \vec{n}_o)$ où O est l'origine du repère et $\vec{u}_o$, $\vec{v}_o$ et $\vec{n}_o$ sont des vecteurs normés orthogonaux entre eux.

Le système optique de suivi de mouvement 1 détermine les coordonnées cartésiennes et l'orientation d'un corps rigide dans le repère orthonormé du système optique de suivi de mouvement 1.

Le système optique de suivi de mouvement 1 comporte au moins deux caméras et un ou plusieurs émetteurs infrarouges. D'autres types de système optique sont utilisables dans le cadre de l'invention, par exemple un système optique à base de laser et/ou avec des marqueurs non volumiques de type pastille.

Le dispositif de contrôle non destructif comporte un premier corps rigide 2 relié à une sonde 3. Le premier corps rigide 2 et la sonde 3 sont reliés de manière fixe et forment un ensemble indivisible. Le premier corps rigide 2 comporte au moins trois cibles sphériques réfléchissantes aux infrarouges situées à des positions distinctes. Le premier corps rigide 2 est associé à un repère orthonormé $R_C = (C, \vec{u}_C, \vec{v}_C, \vec{n}_C)$ où C est l'origine du repère et $\vec{u}_C$, $\vec{v}_C$ et $\vec{n}_C$ sont des vecteurs normés orthogonaux entre eux.

La forme du premier corps rigide 2 c'est-à-dire le positionnement exact des sphères les unes par rapport aux autres est connu à l'avance dans le repère $R_c$.

Dans un mode de réalisation préféré, le premier corps rigide 2 comporte six cibles sphériques.

La sonde 3 est par exemple une sonde ultrason mono-élément. Elle comporte une surface émettrice et réceptrice, dite surface active, 31. La surface active 31 est un rectangle de surface plane. En variante, la sonde 3 est d'un autre type, par exemple une sonde à courant de Foucault.

De manière générale, une surface active est toute surface émettrice ou réceptrice de signaux physiques appartement à une sonde de contrôle non destructif. Par exemple, dans le cas d'un capteur ultrasonore mono élément au contact, cela correspond à la surface du piézoélectrique. Dans le cas d'un capteur ultrasonore mono élément avec un sabot en « Plexiglas », cela correspond à la surface du sabot au travers de laquelle sont émis les signaux ultrasons.

L'invention est décrite pour le suivi d'une sonde, mais elle s'applique également au suivi de plusieurs sondes, simultanément et de manière indépendante.

Le dispositif de contrôle non destructif comporte un dispositif de pointage 4 qui lui-même comporte un second corps rigide 41 et une pointe de précision 42. Le second corps rigide 41 comporte au moins trois cibles sphériques réfléchissantes aux infrarouges situées à des positions distinctes. La forme du second corps rigide 41 c'est-à-dire le positionnement exact des sphères les unes par rapport aux autres est connu à l'avance. Le second corps rigide 41 et la pointe de précision 42 sont reliés de manière fixe et forment un ensemble indivisible. L'origine du second corps rigide 41 a été préalablement configurée pour correspondre à la pointe 42. Ainsi, l'origine du second corps rigide 41 qui sera mesurée par le système optique de suivi de mouvement 1 comme exposé dans la suite correspond exactement au point physique pointé avec le dispositif de pointage.

Dans un mode de réalisation préféré, le second corps rigide 41 comporte sept cibles sphériques.

Le dispositif de contrôle non destructif comporte un module de commande 5 muni d'au moins un bouton d'actionnement 51. De préférence le module de commande 5 est monté sur le dispositif de pointage 4 pour en faciliter l'utilisation.

Le dispositif de contrôle non destructif comporte un calculateur 6 relié au système optique de suivi de mouvement 1 et au module de commande 5.

Le calculateur 6 est par exemple un ordinateur ou une carte électronique. Il comporte notamment un processeur exécutant un programme d'ordinateur mettant en oeuvre le procédé qui va être décrit et une mémoire pour en mémoriser les résultats. Il comporte aussi des interfaces d'entrée et de sortie et peut être associé à un écran de visualisation.

La liaison entre le calculateur 6 et le système optique de suivi de mouvement 1 peut être filaire ou sans fil. De même, la liaison entre le calculateur 6 et le module de commande 5 peut être filaire ou sans fil.

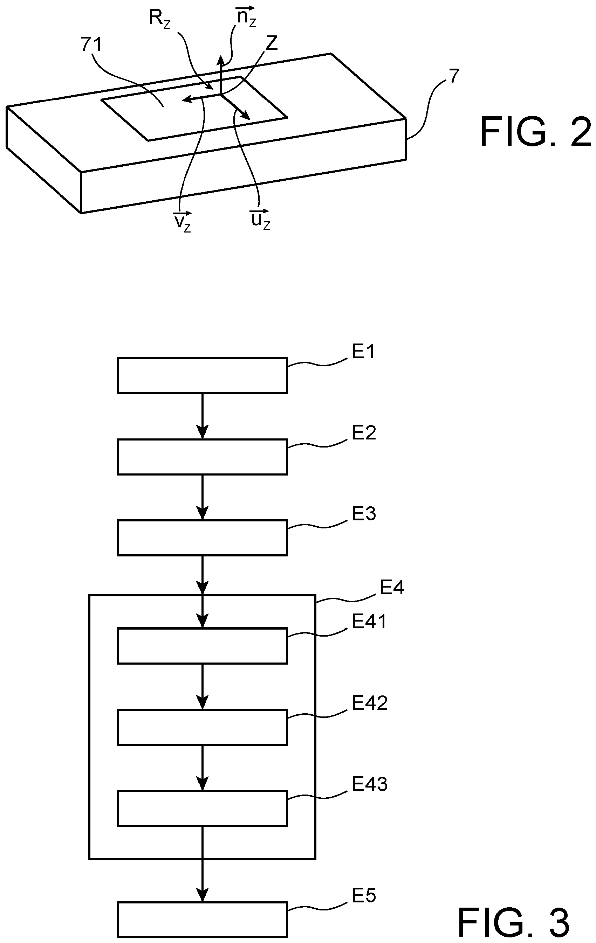

En référence à la **figure 2**, une pièce mécanique à contrôler 7 comporte une zone d'examen 71 définie sur la surface de la pièce mécanique 7. La zone d'examen 71 s'étend sur tout ou partie de la pièce mécanique. La zone d'examen est sur une partie de la pièce mécanique qui a une surface de forme géométrique connue, telle qu'une surface plane, une surface cylindrique ou encore une surface conique, par exemple. Dans tous les cas, la forme géométrique de la zone d'examen peut être représentée par une fonction analytique.

La **figure 3** représente un procédé de configuration du dispositif de contrôle non destructif représenté à la figure 1, sous la forme d'un organigramme présentant des étapes E1 à E5.

On suppose que le dispositif décrit a été disposé de manière à pouvoir contrôler la pièce mécanique 7. En particulier, la zone d'examen 71 est dans le champ de vision des caméras du système optique de suivi de mouvement 1.

L'étape E1 est l'apprentissage d'une position d'une origine Z de la zone d'examen 71 dans le repère $R_O$ du système optique de suivi de mouvement 1.

Le repère $R_O$ est un repère orthonormé dans lequel sont produits la position et l'orientation des corps rigides suivis par le système optique de suivi de mouvement 1. On a $R_O = (O, \vec{u}_O, \vec{v}_O, \vec{n}_O)$, avec O l'origine du repère et $\vec{u}_O, \vec{v}_O, \vec{n}_O$ trois vecteurs normés et orthogonaux.

Cette opération détermine la position dans l'espace qui servira d'origine pour l'ensemble du contrôle de la zone d'examen. L'opérateur positionne la pointe du dispositif de pointage 4 sur un point de la surface de la zone d'examen 71 qui servira d'origine au contrôle. A partir de l'image et du champ de vision de chaque caméra, chaque sphère visible du second corps rigide 41 a une position qui est identifiée dans le système de coordonnées du système optique de suivi de mouvement 1. La liaison entre le second corps rigide 41 et la pointe 42 étant fixe, la position des sphères détermine la position de la pointe, et donc du point de la surface de la zone d'examen 71 sur lequel elle pointe, dans le système de coordonnées du système optique de suivi de mouvement 1.

Lorsque la pointe est positionnée, l'opérateur appuie sur le bouton d'actionnement 51 du module de commande 5, ce qui commande l'enregistrement par le calculateur des coordonnées de la pointe 42 du dispositif de pointage 4 dans le repère $R_O$ du système optique de suivi de mouvement 1. La position mémorisée est l'origine Z de la zone d'examen 71.

L'étape E1 est suivie de l'étape E2 qui est l'apprentissage des dimensions et des axes de la zone d'examen 71 dans le repère $R_O$ du système optique de suivi de mouvement 1.

Cette opération détermine les dimensions et des axes de la zone d'examen 71. L'opérateur positionne successivement la pointe 42 du dispositif de pointage 4 sur une pluralité de points de la surface de la zone d'examen 71. Pour chacun de ces points, lorsque la pointe 42 est positionnée, l'opérateur appuie sur le bouton d'actionnement 51 du module de commande 5, ce qui commande l'enregistrement par le calculateur des coordonnées de la pointe 42 du dispositif de pointage 4 dans le repère $R_O$ du système optique de suivi de mouvement 1.

Le nombre M de points nécessaires et suffisants pour déterminer les dimensions et les axes de la zone d'examen 71 dépend de la forme géométrique de la surface de la zone d'examen 71.

Par exemple, pour une zone d'examen de surface plane et de forme rectangulaire, trois points sont nécessaires et suffisants pour définir la longueur et la largeur du rectangle correspondant à la zone d'examen. Dans le cas d'une surface cylindrique ou d'une surface conique, il faut quatre points. Dans le cas d'une surface d'un cylindre elliptique, il faut six points. La détermination des dimensions de la zone d'examen permet de se passer d'un modèle ad hoc de la pièce mécanique.

Lorsque les M points de la zone d'examen 71 ont été déterminés et mémorisés, le calculateur détermine les dimensions de la zone d'examen 71 et des axes perpendiculaires constituant les axes d'un repère $R_Z = (Z, \vec{u}_Z, \vec{v}_Z, \vec{n}_Z)$, où Z est le point déterminé à l'étape précédente, $\vec{n}_Z$ est un vecteur normé orthogonal à la surface de la zone d'examen au point Z, $\vec{u}_Z$ est un vecteur normé d'un axe de la surface de la zone d'examen et $\vec{v}_Z$ est un vecteur normé orthogonal aux deux vecteurs précédents.

Une matrice $M_{Z,O}$ est la matrice de transformation permettant de passer du repère Ro au repère Rz. La matrice Mz,o est déterminée à partir de l'apprentissage de l'origine, des axes et des dimensions de la zone d'examen 71 dans le repère $R_O$ du système optique de suivi de mouvement 1. La matrice Mz,o est déterminée par l'expression des vecteurs du repère Rz et les coordonnées de l'origine Z du repère Rz dans le repère Ro puis est mémorisée en mémoire.

L'étape E2 est suivie de l'étape E3 qui est l'apprentissage de l'origine et des axes de la surface active 31 de la sonde 3, dans le repère $R_C$ du premier corps rigide 2 associé à la sonde 3.

Cette opération détermine une origine S et des axes de la surface active 31 de la sonde 3 dans le repère $R_C$ du premier corps rigide 2 associé à la sonde 3.

Pour cela, il faut déterminer les coordonnées dans le repère $R_C$ de trois points remarquables A, B, C formant un triangle rectangle en A et du point S sur la surface active 31 de la sonde 3.

L'opérateur positionne la pointe 42 du dispositif de pointage 4 sur quatre différents points de la surface active 31 de la sonde 3. A cette étape, le système optique de suivi de mouvement 1 réalise le suivi du premier et du second corps rigides. Pour chacun des quatre points pointés par la pointe du dispositif de pointage, lorsque la pointe est positionnée, l'opérateur appuie sur le bouton d'actionnement 51 du module de commande 5, ce qui commande l'enregistrement par le calculateur des coordonnées de la pointe du dispositif de pointage dans le repère $R_O$ du système optique de suivi de mouvement 1. Simultanément, les coordonnées et l'orientation du repère $R_C$ du premier corps rigide 2 associé à la sonde 3 dans le repère $R_O$ sont déterminées par le système optique de suivi de mouvement 1 et sont enregistrées. Les coordonnées et l'orientation du repère $R_C$ du premier corps rigide 2 dépendent de la position du premier corps rigide 2 et donc de la sonde 3 par rapport au repère Ro. Il faut donc les déterminer simultanément à la détermination des trois points A, B et C.

Puis le calculateur détermine des axes perpendiculaires constituant les axes d'un repère Rs de la surface active 31 de la sonde 3, avec $R_S = (S, \vec{u}_S, \vec{v}_S, \vec{n}_S)$, où S est le point origine, $\vec{n}_S$ est un vecteur normé orthogonal à la surface active au point S, $\vec{u}_S$ est un vecteur normé d'un axe de la surface active et $\vec{v}_S$ est un vecteur normé orthogonal aux deux vecteurs précédents. Ces vecteurs sont formés à partir des points A, B et C.

Le calculateur effectue ensuite le calcul de la position et de l'orientation de la surface active 31 de la sonde 3 dans le repère $R_C$ du premier corps rigide 2 associé à la sonde 3. Pour cela, les positions enregistrées des points de la surface active 31 de la sonde 3 sont exprimées dans le repère $R_C$ du premier corps rigide 2 associé à la sonde 3 par le biais d'un changement de repère entre le repère $R_O$ et le repère Rc.

Ce changement de repère utilise une matrice Mc,o de transformation permettant de passer du repère $R_O$ au repère $R_C$. La matrice Mc,o est fournie par l'inversion d'une matrice Mo,c. La matrice Mo,c est déterminée à partir des informations fournies par le système optique de suivi de mouvement 1 pour le corps rigide 2 lié à la sonde 3. La matrice $M_{O,C}$ est déterminée d'après la position et l'orientation du repère $R_C$ dans le repère $R_O$. Les valeurs de cette matrice sont dynamiques puisqu'elles sont liées au premier corps rigide 2 lié à la sonde 3 qui n'est pas statique par rapport au repère Ro.

La matrice Mc,o permet de déterminer les coordonnées dans le repère $R_C$ des trois points remarquables A, B, C formant un triangle rectangle en A et du point S sur la surface active 31 de la sonde 3, à partir de leur coordonnées dans le repère $R_O$ du système optique de suivi de mouvement 1.

Les coordonnées de ces points dans le repère $R_C$ permettent de déterminer la position et l'orientation du repère Rs de la surface active 31 de la sonde 3 dans le repère Rc, par le biais d'une matrice de transformation Mc,s qui permet de passer du repère Rs vers le repère Rc. La matrice de transformation Mc,s est mémorisée en mémoire.

Il est à noter que pour un ensemble donné de sonde 3 et premier corps rigide 2 dont la liaison est fixe, l'étape E3 peut être effectuée une fois pour toutes et ses résultats mémorisés sont réutilisés à chaque fois que le dispositif de contrôle non destructif est mis en oeuvre pour contrôler une pièce mécanique.

L'étape E3 doit être effectuée pour chaque ensemble différent de sonde et premier corps rigide qui est utilisé dans le cadre de l'invention.

L'étape E3 est suivie de l'étape E4 qui est la détermination de l'origine et de l'orientation de la surface active 31 de la sonde, dans le repère $R_Z$ de la zone d'examen 71. L'étape E4 comporte des sous-étapes E41 à E43.

On suppose que l'opérateur déplace la sonde 3 sur la surface de la zone d'examen 71.

L'étape E41 est un suivi de mouvement du premier corps rigide 2 lié à la sonde 3 par le système optique de suivi de mouvement 1.

Le résultat est un ensemble de positions et d'orientations du premier corps rigide 2 lié à la sonde 3, exprimées dans le repère $R_O$ du système optique de suivi de mouvement 1.

L'étape suivante E42 est la détermination de la matrice dynamique Mo,c, qui est la matrice de transformation permettant de passer du repère $R_C$ au repère Ro.

Comme précédemment, les valeurs de cette matrice sont dynamiques puisqu'elles sont liées au corps rigide 2 lié à la sonde 3 qui n'est pas statique par rapport au repère Ro. La matrice Mo,c dépend donc du mouvement du corps rigide 2.

La matrice Mo,c est fournie par le résultat de l'étape E41 de suivi de mouvement du premier corps rigide 2 lié à la sonde 3 par le système optique de suivi de mouvement 1.

L'étape suivante E43 est la détermination de la matrice de transformation Mz,s permettant de passer du repère Rs au repère Rz.

Pour tout point P de coordonnées Xs(P) dans le repère Rs, on peut écrire l'équation suivante :

$$X_Z(P) = M_{Z,S} . X_S(P)$$

Où Xz(P) représente les coordonnées du point P dans le repère Rz et Mz,s représente la matrice de transformation permettant de passer du repère Rs au repère Rz.

Cette équation est équivalente à :

$$X_Z(P) = M_{Z,O} . M_{O,C} . M_{C,S} . X_S(P)$$

La matrice Mz,o est fournie par le résultat des étapes d'apprentissage E1 et E2.

La matrice Mc,s est fournie par le résultat de l'étape d'apprentissage E3.

La matrice Mz,s permet d'exprimer la position et l'orientation de la surface active 31 de la sonde 3 dans le repère Rz de la zone d'examen 71.

Il est à noter que les étapes E1 à E4 sont réalisées sans connaissance a priori de la géométrie de la zone d'examen ni de celle de la surface active.

L'étape E4 est suivie de l'étape E5 à laquelle la position et l'orientation de la surface active 31 de la sonde 3 dans le repère Rz de la zone d'examen 71 sont affichées sur un écran de visualisation.

La configuration du dispositif de contrôle non destructif d'une pièce mécanique exposée ci-dessus permet de garantir la validité d'une inspection manuelle de la pièce mécanique 7 effectuée par un opérateur à l'aide du dispositif.

Pour cela, la configuration est tout d'abord effectuée. Ainsi, suivant les cas, l'opérateur effectue, modifie ou charge la configuration. En effet, une configuration donnée peut être utilisée plusieurs fois en l'absence de modification des différents organes utilisés.

Au cours du contrôle proprement dit, le calculateur produit alors les informations suivantes :

- Position de la surface active 31 de la sonde 3 par rapport au repère Rz de la zone d'examen 71,
- Orientation de la surface active 31 de la sonde 3 par rapport au repère $R_Z$ de la zone d'examen 71.

A partir de ces informations, le calculateur est capable notamment de :

- Déterminer la vitesse de déplacement de la surface active 31 de la sonde 3,
- Vérifier le respect de l'orientation de la sonde 3 par rapport aux axes de la zone d'examen 71,
- Vérifier l'accomplissement de la couverture de la zone d'examen 71, par exemple en termes de résolution, de dimensions et de géométrie, par rapport à une couverture prédéfinie, en utilisant en outre les informations de dimensions de la zone d'examen,
- Vérifier le couplage (hauteur et inclinaison) entre la surface active 31 de la sonde 3 et la zone d'examen 71 de la pièce mécanique 7.

**Revendications**

1. Procédé de configuration d'un dispositif de contrôle non destructif d'une pièce mécanique (7), le dispositif comportant un système optique de suivi de mouvement (1), une sonde de contrôle non destructif (3) reliée de manière fixe à un premier corps rigide (2), et un dispositif de pointage (4) comportant une pointe (42) et relié de manière fixe à un second corps rigide (41), le procédé comportant des étapes de :

   apprentissage (E1) d'une origine (Z) d'une zone d'examen (71) de la surface de la pièce mécanique à l'aide du dispositif de pointage, dans un repère ($R_O$) lié au système optique de suivi de mouvement,
   apprentissage (E2) d'axes de la zone d'examen de la pièce mécanique à l'aide du dispositif de pointage, dans le repère ($R_O$) lié au système optique de suivi de mouvement, de manière à définir un repère ($R_Z$) lié à la zone d'examen, le procédé étant **caractérisé en ce qu'**il comporte des étapes de : apprentissage (E3) d'une origine et d'axes d'une surface émettrice et réceptrice, dite surface active (31), de la sonde à l'aide du dispositif de pointage, dans un repère ($R_C$) lié au premier corps rigide de la sonde, par détermination d'une origine et d'axes de la surface active dans le repère ($R_O$) lié au système optique de suivi de mouvement, détermination simultanée des coordonnées et de l'orientation du repère ($R_C$) lié au premier corps rigide de la sonde dans le repère ($R_O$) lié au système optique de suivi de mouvement, et changement de repère entre le repère ($R_O$) lié au système optique de suivi de mouvement et le repère ($R_C$) lié au premier corps rigide de la sonde, et détermination (E4) de la position et de l'orientation de la surface active de la sonde, dans le repère lié à la zone d'examen.

2. Procédé de configuration d'un dispositif de contrôle non destructif d'une pièce mécanique selon la revendication 1, **caractérisé en ce que** les étapes (E1, E2) d'apprentissage de l'origine et des axes de la zone d'examen comporte la détermination d'une matrice de transformation ($M_{Z,O}$) permettant de passer du repère ($R_O$) lié au système optique de suivi de mouvement au repère ($R_Z$) lié à la zone d'examen.

3. Procédé de configuration d'un dispositif de contrôle non destructif d'une pièce mécanique selon la revendication 1 ou 2, **caractérisé en ce que** l'étape (E3) d'apprentissage de l'origine et des axes de la surface active de la sonde comporte la détermination d'une matrice de transformation ($M_{C,O}$) permettant de passer du repère ($R_O$) lié au système optique de suivi de mouvement au repère ($R_C$) lié au premier corps rigide et d'une matrice de transformation ($M_{C,S}$) permettant de passer d'un repère ($R_S$) lié à la surface active de la sonde au repère ($R_C$) lié au premier corps rigide.

4. Procédé de configuration d'un dispositif de contrôle non destructif d'une pièce mécanique selon l'une quelconque des revendications 1 à 3, **caractérisé en ce que** l'étape de détermination (E4) de la position et de l'orientation de la surface active de la sonde, dans le repère lié à la zone d'examen, comporte

   - un suivi de mouvement du premier corps rigide (2) lié à la sonde (3) par le système optique de suivi de mouvement,
   - une détermination d'une matrice dynamique ($M_{O,C}$), qui est la matrice de transformation permettant de passer du repère ($R_C$) lié au premier corps rigide au repère ($R_O$) lié au système optique de suivi de mouvement,
   - une détermination d'une matrice de transformation ($M_{Z,S}$) permettant de passer du repère ($R_S$) lié à la surface active de la sonde au repère ($R_Z$) lié à la zone d'examen.

5. Procédé de configuration d'un dispositif de contrôle non destructif d'une pièce mécanique selon la revendication 1, le dispositif comportant en outre un calculateur (6), une mémoire et un module de commande (5) pour commander un enregistrement de position de la pointe (42) en mémoire, le procédé comportant une mémorisation de l'origine et des axes de la zone d'examen (71), et de l'origine et des axes de la surface active (31) de la sonde (3), dans le repère (R$_O$) lié au système optique de suivi de mouvement.

6. Procédé de configuration d'un dispositif de contrôle non destructif d'une pièce mécanique selon la revendication 5, comportant une mémorisation de l'origine et de l'orientation de la surface active (31) de la sonde (3), dans un repère (R$_Z$) lié à la zone d'examen (71).

7. Procédé de configuration d'un dispositif de contrôle non destructif d'une pièce mécanique selon l'une quelconque des revendications 1 à 6, **caractérisé en ce qu'**il comporte aussi une étape (E2) de détermination des dimensions de la zone d'examen (71).

8. Procédé de contrôle non destructif d'une pièce mécanique, comportant l'exécution préalable du procédé de configuration selon l'une quelconque des revendications 1 à 7,
**caractérisé en ce qu'**il comporte au moins une étape parmi :

   - Détermination de la vitesse de déplacement de la surface active (31) de la sonde (3),
   - Vérification de l'orientation de la sonde (3) par rapport au repère (R$_Z$) lié à la zone d'examen (71),
   - Vérification de l'accomplissement de la couverture de la zone d'examen (71), par rapport à une couverture prédéfinie,
   - Vérification du couplage entre la surface active (31) de la sonde (3) et la zone d'examen (71) de la pièce mécanique (7).

9. Dispositif de contrôle non destructif d'une pièce mécanique (7), comportant un système optique de suivi de mouvement (1), une sonde de contrôle non destructif (3) reliée de manière fixe à un premier corps rigide (2), un dispositif de pointage (4) comportant une pointe (42) et relié de manière fixe à un second corps rigide (41), et un calculateur 6), le calculateur étant configuré pour :

   apprendre une origine d'une zone d'examen (71) de la surface de la pièce mécanique à l'aide du dispositif de pointage, dans un repère (R$_O$) lié au système optique de suivi de mouvement, apprendre des axes de la zone d'examen (71) de la pièce mécanique à l'aide du dispositif de pointage, dans le repère (R$_O$) lié au système optique de suivi de mouvement, de manière à définir un repère (R$_Z$) lié à la zone d'examen, le dispositif étant **caractérisé en ce que** le calculateur est configuré pour : apprendre une origine et des axes d'une surface émettrice et réceptrice,
dite surface active (31) de la sonde (3) à l'aide du dispositif de pointage, dans un repère (R$_C$) lié au premier corps rigide (2) de la sonde, par détermination d'une origine et d'axes de la surface active dans le repère (R$_O$) lié au système optique de suivi de mouvement, détermination simultanée des coordonnées et de l'orientation du repère (R$_C$) lié au premier corps rigide de la sonde dans le repère (R$_O$) lié au système optique de suivi de mouvement, et changement de repère entre le repère (R$_O$) lié au système optique de suivi de mouvement et le repère (R$_C$) lié au premier corps rigide de la sonde, et déterminer l'origine et l'orientation de la surface active (31) de la sonde, dans un repère (R$_Z$) lié à la zone d'examen (71).

10. Dispositif de contrôle non destructif d'une pièce mécanique selon la revendication 9 **caractérisé en ce que** le calculateur (6) est aussi configuré pour déterminer les dimensions de la zone d'examen (71).

11. Dispositif de contrôle non destructif d'une pièce mécanique selon la revendication 10,
**caractérisé en ce que** le calculateur (6) est aussi configuré pour effectuer au moins une opération parmi :

   - Déterminer la vitesse de déplacement de la surface active (31) de la sonde (3),
   - Vérifier l'orientation de la sonde (3) par rapport aux axes de la zone d'examen (71),
   - Vérifier l'accomplissement de la couverture de la zone d'examen (71), par rapport à une couverture prédéfinie,
   - Vérifier le couplage entre la surface active (31) de la sonde et la zone d'examen (71) de la pièce mécanique.

12. Programme d'ordinateur comportant des instructions qui conduisent le dispositif selon la revendication 9 à exécuter les étapes du procédé selon l'une quelconque des revendications 1 à 8.

13. Support d'enregistrement lisible par un ordinateur sur lequel est enregistré le programme d'ordinateur selon la revendication 12.

**Patentansprüche**

1. Verfahren zum Konfigurieren einer Vorrichtung zur zerstörungsfreien Prüfung eines mechanischen Teils (7), wobei die Vorrichtung ein optisches Bewegungsverfolgungssystem (1), eine zerstörungsfreie Prüfsonde (3), die fest mit einem ersten starren Körper (2) verknüpft ist, und eine Zeigevorrichtung (4), die eine Spitze (42) umfasst und fest mit einem zweiten starren Körper (41) verknüpft ist, umfasst, wobei das Verfahren folgende Schritte umfasst:

Erlernen (E1) eines Ursprungs (Z) eines Untersuchungsbereichs (71) der Oberfläche des mechanischen Teils mit Hilfe der Zeigevorrichtung in einem Bezugssystem ($R_O$), das mit dem optischen Bewegungsverfolgungssystem verknüpft ist,

Erlernen (E2) von Achsen des Untersuchungsbereichs des mechanischen Teils mit Hilfe der Zeigevorrichtung in dem Bezugssystem ($R_O$), das mit dem optischen Bewegungsverfolgungssystem verknüpft ist, um ein mit dem Untersuchungsbereich verknüpftes Bezugssystem (Rz) zu definieren,

wobei das Verfahren **dadurch gekennzeichnet ist, dass** es folgende Schritte umfasst:

Erlernen (E3) eines Ursprungs und der Achsen einer Sende- und Empfangsfläche, der so genannten aktiven Oberfläche (31), der Sonde mit Hilfe der Zeigevorrichtung in einem Bezugssystem, das mit dem ersten starren Körper der Sonde verknüpft ist, durch das Bestimmen eines Ursprungs und der Achsen der aktiven Oberfläche in dem Bezugssystem ($R_O$), das mit dem optischen Bewegungsverfolgungssystem verknüpft ist, gleichzeitige Bestimmen der Koordinaten und der Ausrichtung des Bezugssystems (Rc), das mit dem ersten starren Körper der Sonde im Bezugssystem (Ro) verknüpft ist, und Ändern des Bezugssystems zwischen dem Bezugssystem ($R_O$), das mit dem optischen Bewegungsverfolgungssystem verknüpft ist, und dem Bezugssystem (Rc), das mit dem ersten starren Körper der Sonde verknüpft ist, und

Bestimmen (E4) der Position und der Ausrichtung der aktiven Oberfläche der Sonde in dem mit dem Untersuchungsbereich verknüpften Bezugssystem.

2. Verfahren zum Konfigurieren einer Vorrichtung zur zerstörungsfreien Prüfung eines mechanischen Teils nach Anspruch 1, **dadurch gekennzeichnet, dass** die Schritte (E1, E2) des Erlernens des Ursprungs und der Achsen des Untersuchungsbereichs das Bestimmen einer Transformationsmatrix ($M_{Z,O}$) umfassen, die den Übergang von dem mit dem optischen Bewegungsverfolgungssystem verknüpften Bezugssystem ($R_O$) zu dem mit dem Untersuchungsbereich verknüpften Bezugssystem (Rz) ermöglicht.

3. Verfahren zum Konfigurieren einer Vorrichtung zur zerstörungsfreien Prüfung eines mechanischen Teils nach Anspruch 1 oder 2, **dadurch gekennzeichnet, dass** der Schritt (E3) des Erlernens des Ursprungs und der Achsen der aktiven Oberfläche der Sonde das Bestimmen einer Transformationsmatrix (Mc,o), die den Übergang von dem mit dem optischen Bewegungsverfolgungssystem verknüpften Bezugssystem ($R_O$) zu dem mit dem ersten starren Körper verknüpften Bezugssystem (Rc) ermöglicht, und einer Transformationsmatrix (Mc,s) umfasst, die den Übergang von einem mit der aktiven Oberfläche der Sonde verknüpften Bezugssystem (Rs) zu einem mit dem ersten starren Körper verknüpften Bezugssystem (Rc) ermöglicht.

4. Verfahren zum Konfigurieren einer Vorrichtung zur zerstörungsfreien Prüfung eines mechanischen Teils nach einem der Ansprüche 1 bis 3, **dadurch gekennzeichnet, dass** der Schritt des Bestimmens (E4) der Position und der Ausrichtung der aktiven Oberfläche der Sonde im mit dem Untersuchungsbereich verknüpften Bezugssystem Folgendes umfasst:

- Eine Bewegungsverfolgung des mit der Sonde (3) verknüpften ersten starren Körpers (2) durch das optische Bewegungsverfolgungssystem,
- eine Bestimmung einer dynamischen Matrix (Mo,c), die die Transformationsmatrix ist, die den Übergang von dem mit dem ersten starren Körper verknüpften Bezugssystem (Rc) zu dem mit dem optischen Bewegungsverfolgungssystem verknüpften Bezugssystem ($R_O$) ermöglicht,
- eine Bestimmung einer Transformationsmatrix (Mz,s), die den Übergang von dem mit der aktiven Oberfläche der Sonde verknüpften Bezugssystem (Rs) zu dem mit dem Untersuchungsbereich verknüpften Bezugssystem (Rz) ermöglicht.

5. Verfahren zum Konfigurieren einer Vorrichtung zur zerstörungsfreien Prüfung eines mechanischen Teils nach Anspruch 1, wobei die Vorrichtung ferner einen Rechner (6), einen Speicher und ein Steuermodul (5) zur Steuerung einer Positionsaufzeichnung der Spitze (42) im Speicher umfasst, wobei das Verfahren das Speichern des Ursprungs und der Achsen des Untersuchungsbereichs (71) sowie des Ursprungs und der Achsen der aktiven Oberfläche (31) der Sonde (3) in dem mit dem optischen Bewegungsverfolgungssystem verknüpften Bezugssystem ($R_O$) umfasst.

6. Verfahren zum Konfigurieren einer Vorrichtung zur zerstörungsfreien Prüfung eines mechanischen Teils nach Anspruch 5, umfassend das Speichern des Ursprungs und der Ausrichtung der aktiven Oberfläche (31) der Sonde (3) in einem mit dem Untersuchungsbereich (71) verknüpften Bezugssystems (Rz).

7. Verfahren zum Konfigurieren einer Vorrichtung zur zerstörungsfreien Prüfung eines mechanischen Teils nach einem der Ansprüche 1 bis 6, **dadurch gekennzeichnet, dass** es ferner einen Schritt (E2) des Bestimmens der Abmessungen des Untersuchungsbereichs (71) umfasst.

8. Zerstörungsfreies Prüfverfahren für ein mechanisches Teil, umfassend die vorherige Ausführung des Konfigurationsverfahrens nach einem der Ansprüche 1 bis 7,

   **dadurch gekennzeichnet, dass** es mindestens einen der folgenden Schritte umfasst:

   - Bestimmen der Bewegungsgeschwindigkeit der aktiven Oberfläche (31) der Sonde (3),
   - Überprüfen der Ausrichtung der Sonde (3) in Bezug auf das mit dem Untersuchungsbereich (71) verknüpfte Bezugssystem (Rz),
   - Überprüfen der Vollendung der Abdeckung des Untersuchungsbereichs (71) in Bezug auf eine vordefinierte Abdeckung,
   - Überprüfen der Kopplung zwischen der aktiven Oberfläche (31) der Sonde (3) und dem Untersuchungsbereich (71) des mechanischen Teils (7).

9. Vorrichtung zur zerstörungsfreien Prüfung eines mechanischen Teils (7), umfassend ein optisches Bewegungsverfolgungssystem (1), eine zerstörungsfreie Prüfsonde (3), die fest mit einem ersten starren Körper (2) verknüpft ist, eine Zeigevorrichtung (4), die eine Spitze (42) umfasst und fest mit einem zweiten starren Körper (41) verknüpft ist, und einen Rechner (6),

   wobei der Rechner für Folgendes konfiguriert ist:

   Erlernen eines Ursprungs eines Untersuchungsbereichs (71) der Oberfläche des mechanischen Teils mit Hilfe der Zeigevorrichtung in einem Bezugssystem (R$_O$), das mit dem optischen Bewegungsverfolgungssystem verknüpft ist,
   Erlernen der Achsen des Untersuchungsbereichs (71) des mechanischen Teils mit Hilfe der Zeigevorrichtung im Bezugssystem (R$_O$), das mit dem optischen Bewegungsverfolgungssystem verknüpft ist, um ein mit dem Untersuchungsbereich verknüpftes Bezugssystem (Rz) zu definieren,
   wobei die Vorrichtung **dadurch gekennzeichnet ist, dass** der Rechner für Folgendes konfiguriert ist:

   Erlernen eines Ursprungs und der Achsen einer Sende- und Empfangsfläche, der so genannten aktiven Oberfläche (31), der Sonde (3) mit Hilfe der Zeigevorrichtung in einem Bezugssystem (Rc), das mit dem ersten starren Körper (2) der Sonde verknüpft ist, durch das Bestimmen eines Ursprungs und der Achsen der aktiven Oberfläche in dem Bezugssystem (R$_O$), das mit dem optischen Bewegungsverfolgungssystem verknüpft ist, gleichzeitige Bestimmen der Koordinaten und der Ausrichtung des Bezugssystems (Rc), das mit dem ersten starren Körper der Sonde im Bezugssystem (Ro) verknüpft ist, und Ändern des Bezugssystems zwischen dem Bezugssystem (R$_O$), das mit dem optischen Bewegungsverfolgungssystem verknüpft ist, und dem Bezugssystem (Rc), das mit dem ersten starren Körper der Sonde verknüpft ist, und Bestimmen der Position und der Ausrichtung der aktiven Oberfläche (31) der Sonde in dem mit dem Untersuchungsbereich (71) verknüpften Bezugssystem (R$_Z$).

10. Vorrichtung zur zerstörungsfreien Prüfung eines mechanischen Teils nach Anspruch 9, **dadurch gekennzeichnet, dass** der Rechner (6) auch dazu konfiguriert ist, die Abmessungen des Untersuchungsbereichs (71) zu bestimmen.

11. Vorrichtung zur zerstörungsfreien Prüfung eines mechanischen Teils nach Anspruch 10,
    **dadurch gekennzeichnet, dass** der Rechner (6) auch dazu konfiguriert ist, mindestens eine der folgenden Operationen auszuführen:

    - Bestimmen der Bewegungsgeschwindigkeit der aktiven Oberfläche (31) der Sonde (3),
    - Überprüfen der Ausrichtung der Sonde (3) in Bezug auf die Achsen des Untersuchungsbereichs (71),
    - Überprüfen der Vollendung der Abdeckung des Untersuchungsbereichs (71) in Bezug auf eine vordefinierte Abdeckung,
    - Überprüfen der Kopplung zwischen der aktiven Oberfläche (31) der Sonde und dem Untersuchungsbereich (71) des mechanischen Teils.

12. Computerprogramm, das Anweisungen umfasst, die die Vorrichtung nach Anspruch 9 dazu veranlassen, die Schritte des Verfahrens nach einem der Ansprüche 1 bis 8 durchzuführen.

13. Computerlesbares Speichermedium, auf dem das Computerprogramm nach Anspruch 12 gespeichert ist.

**Claims**

1. Method for configuring a device for non-destructive testing of a mechanical part (7), the device including an optical movement-monitoring system (1), a non-destructive testing sensor (3) connected fixedly to a first rigid body (2), and a pointing device (4) including a tip (42) and fixedly connected to a second rigid body (41),
the method including steps of:

   learning (E1) an origin (Z) of an examination zone (71) of the surface of the mechanical part using the pointing device, in a reference frame (Ro) relating to the optical movement-monitoring system,
   learning (E2) axes of the examination zone of the mechanical part by means of the pointing device, in the reference frame (Ro) relating to the optical movement-monitoring system, so as to define a reference frame ($R_Z$) relating to the examination zone,
   the method being **characterised in that** it includes steps of:

      learning (E3) an origin and axes of an emitting and receiving surface, referred to as the active surface (31), of the sensor by means of the pointing device, in a reference frame ($R_C$) relating to the first rigid body of the sensor, by determining an origin and axes of the active surface in the reference frame (Ro) linked to the optical movement-monitoring system, simultaneous determination of the coordinates and of the orientation of the reference frame ($R_C$) relating to the first rigid body of the sensor in the reference frame ($R_O$) relating to the optical movement-monitoring system, and changing reference frame between the reference frame ($R_O$) relating to the optical movement monitoring system and the reference frame ($R_C$) relating to the first rigid body of the sensor, and
      determining (E4) the position and the orientation of the active surface of the sensor, in the reference frame relating to the examination zone.

2. Method for configuring a device for the non-destructive testing of a mechanical part according to claim 1, **characterised in that** the steps (E1, E2) of learning the origin and axes of the examination zone includes determining a transformation matrix ($M_{Z,O}$) for passing from the reference frame ($R_O$) relating to the optical movement-monitoring system to the reference frame (Rz) relating to the examination zone.

3. Method for configuring a device for the non-destructive testing of a mechanical part according to claim 1 or 2, **characterised in that** the step (E3) of learning the origin and axes of the active surface of the sensor includes determining a transformation matrix (Mc,o) for passing from the reference frame (Ro) relating to the optical movement-monitoring system to the reference frame ($R_C$) relating to the first rigid body and a transformation matrix (Mc,s) for passing from a reference frame (Rs) relating to the active surface of the sensor to the reference frame (Re) relating to the first rigid body.

4. Method for configuring a device for the non-destructive testing of a mechanical part according to any one of claims 1 to 3, **characterised in that** the step of determining (E4) the position and the orientation of the active surface of the sensor, in the reference frame relating to the examination zone, includes

   - monitoring of movement of the first rigid body (2) connected to the sensor (3) by the optical movement-monitoring system,
   - determining a dynamic matrix ($M_{O,C}$), which is the transformation matrix making it possible to pass from the reference frame (Re) relating to the first rigid body to the reference frame ($R_O$) relating to the optical movement-monitoring system,
   - determining a transformation matrix (Mz,s) making it possible to pass from the reference frame (Rs) relating to the active surface of the sensor to the reference frame (Rz) relating to the examination zone.

5. Method for configuring a device for the non-destructive testing of a mechanical part according to claim 1, the device furthermore including a computer (6), a memory and a control module (5) for controlling a recording of the position of the tip (42) in memory, the method including storage of the origin and axes of the examination zone (71), and of the origin and axes of the active zone (31) of the sensor (3), in the reference frame ($R_O$) relating to the optical movement-monitoring system.

6. Method for configuring a device for the non-destructive testing of a mechanical part according to claim 5, including storage of the origin and of the orientation of the active surface (31) of the sensor (3), in a reference frame (Rz) relating to the examination zone (71).

7. Method for configuring a device for the non-destructive testing of a mechanical part according to any one of claims 1 to 6, **characterised in that** it also includes a step (E2) of determining the dimensions of the examination zone (71).

**8.** Method for the non-destructive testing of a mechanical part, including the prior implementation of the configuration method according to any one of claims 1 to 7,
**characterised in that** it includes at least one step from:

- determining the speed of movement of the active surface (31) of the sensor (3),
- checking the orientation of the sensor (3) with respect to the reference frame (Rz) relating to the examination zone (71),
- checking the accomplishment of the coverage of the examination zone (71), compared with a predefined coverage,
- checking the coupling between the active surface (31) of the sensor (3) and the examination zone (71) of the mechanical part (7).

**9.** Device for the non-destructive testing of a mechanical part (7), including an optical movement-monitoring system (1), a non-destructive testing sensor (3) connected fixedly to a first rigid body (2), a pointing device (4) including a tip (42) and fixedly connected to a second rigid body (41), and a computer (6), the computer being configured to:

learn an origin of an examination zone (71) of the surface of the mechanical part by means of the pointing device, in a reference frame (Ro) relating to the optical movement-monitoring system,

learn axes of the examination zone (71) of the mechanical part using the pointing device, in the reference frame ($R_O$) relating to the optical movement-monitoring system, so as to define a reference frame (Rz) relating to the examination zone,

the device being **characterised in that** the computer is configured to:

learn an origin and axes of an emitting and receiving surface, referred to as the active surface (31) of the sensor (3), by means of the pointing device, in a reference frame ($R_C$) relating to the first rigid body (2) of the sensor, by determining an origin and axes of the active surface in the reference frame (Ro) relating to the optical movement-monitoring system, simultaneous determination of the coordinates and of the orientation of the reference frame ($R_C$) relating to the first rigid body of the sensor in the reference frame ($R_O$) relating to the optical movement-monitoring system, and change of reference frame between the reference frame ($R_O$) relating to the optical movement monitoring system and the reference frame ($R_C$)

relating to the first rigid body of the sensor, and

determine the origin and the orientation of the active surface (31) of the sensor, in a reference frame (Rz) relating to the examination zone (71).

**10.** Device for the non-destructive testing of a mechanical part according to claim 9, **characterised in that** the computer (6) is also configured to determine the dimensions of the examination zone (71).

**11.** Device for the non-destructive testing of a mechanical part according to claim 10,
**characterised in that** the computer (6) is also configured to perform at least one operation from:

- determining the speed of movement of the active surface (31) of the sensor (3),
- checking the orientation of the sensor (3) with respect to the axes of the examination zone (71),
- checking the accomplishment of the coverage of the examination zone (71), compared with a predefined coverage,
- checking the coupling between the active surface (31) of the sensor and the examination zone (71) of the mechanical part.

**12.** Computer program including instructions that lead the device according to claim 9 to implement the steps of the method according to any one of claims 1 to 8.

**13.** Recording medium that can be read by a computer on which the computer program according to claim 12 is recorded.

FIG. 1a

FIG. 1b

FIG. 1c

FIG. 1d

FIG. 2

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 9715902
- EP 1096268 A
- US 5748854 A
- US 2011119025 A1